# EUROPÄISCHE PATENTANMELDUNG

(11) **EP 1 842 594 A1**
(43) Veröffentlichungstag der Anmeldung: **10.10.2007**
(21) Anmeldenummer: 07007290.5
(22) Anmeldetag: 07.04.2007
(51) Int. Cl.: B02C 21/02, A01G 3/00, B02C 18/22

(54) **Vorrichtung zum Zerkleinern von organischem, verrottungsfähigen Abfallmaterial**

(30) Priorität: 07.04.2006 DE 202006006202 U
(71) Anmelder: J. Willibald GmbH, 68639 Wald-Sentenhart (DE)
(72) Erfinder: Willibald, Josef, 88639 Wald-Sentenhart (DE)
(74) Vertreter: Fürst, Siegfried

(57) **Zusammenfassung**

Die Erfindung betrifft eine Vorrichtung zum Zerkleinern von organischen, verrottungsfähigen Abfallmaterialen, wie z.B. Schnitt- und Astholz, Holzpaletten, Reisig aus Obst- bzw. Forstwirtschaft, Friedhofsabfällen, Gestrüpp oder dergleichen Materialien, welche lose aufgeschichtet als Abfallmieten oder als eine Schwade liegend zur Zerkleinerung vorliegen. Wesentlich bei der neuen Vorrichtung ist, dass dieses Abfallmaterial, welches in der Regel in unterschiedlichster Mischung vorliegt, von der Vorrichtung zum Zerkleinern selbst aufgenommen, mit selbiger zu einer so genannten Materialmatratze zusammengedrückt und sodann zerkleinert wird. Bei der Bildung der so genannten Materialmatratze wirken die Einzugs- bzw. Zuführeinheiten, der Fräsrotor und beidseits vor dem Einzugsspalt, der dem Fräsrotor vorgelagert ist, angeordnete, im Wesentlichen vertikal und trichterförmig positionierte Leitbleche sowie der Vorschub der Vorrichtung in Fahrtrichtung "Vorwärts" zusammen.

## Beschreibung

Die Erfindung betrifft eine Vorrichtung zum Zerkleinern von organischen, verrottungsfähigen Abfallmaterialen, wie z.B. Schnitt- und Astholz, Holzpaletten, Reisig aus Obst- bzw. Forstwirtschaft, Friedhofsabfällen, Gestrüpp oder dergleichen Materialien, welche lose aufgeschichtet als Abfallmieten oder als eine Schwade liegend zur Zerkleinerung vorliegen.

Bekannt sind Vorrichtungen zum Zerkleinern besagter organischer, verrottungsfähiger Abfallmaterialen, bei denen auf einem Fahrwerk einenends ein Aufnahmetrichter angeordnet ist und anderenends eine Einheit mit den Zerkleinerungsorganen, wobei das Material mittels einem durch den Aufnahmetrichter hindurch zu der Zerkleinerungseinheit hin führenden Förderboden der Zerkleinerungseinheit zugeführt wird, z.B. die Abfall-Zerkleinerungsreinheit nach der DE 44 02 111 A1.
Zur Beschickung solcher Vorrichtungen mit zu zerkleinerndem Material ist ein separater Radlader notwendig. Es ist auch bekannt, dass an derartigen Vorrichtungen zum Zerkleinern besagten Abfallmaterials eine Greifeinheit stationär angeordnet ist, mit welcher das lose auf einem Haufen liegende Material von dort in den Trichter hinein befördert wird, z.B. die Zerkleinerungsvorrichtung nach der DE 84 28 150 U1.

Bei Einsatz derartiger Technik ist also die Vorrichtung zum Zerkleinern an sich notwendig sowie eine weitere Einheit, mit der der Aufnahmetrichter beschickt wird oder ein Fahrzeug, in der Regel eine Zugmaschine (Traktor), mit welchem die mit einer stationären Greifeinheit ausgestattete Zerkleinerungsvorrichtung entlang der Miete gezogen bzw. geschoben wird.

Die Aufgabe der Erfindung besteht daher darin, an sich bekannte Zerkleinerungseinheiten für organische, verrottungsfähige Abfallmaterialien dahingehend weiterzuentwickeln, dass der anlagentechnische Aufwand zur Zerkleinerung der in Mieten, Haufen oder Schwaden vorliegenden lose aufgestapelten Abfallmaterialien besagter Art gegenüber bekannten Vorrichtungen verringert werden kann, zudem soll die neue Vorrichtung auch im unwegsamen Gelände einsetzbar sein.

Die Aufgabe wird gelöst durch eine Vorrichtung zum Zerkleinern von organischen, verrottungsfähigen Abfallmaterialien mit den Merkmalen des Anspruches 1. Ausführungsvarianten und Weiterbildungen der Erfindung sind in den nachgeordneten Ansprüchen 2 bis 16 genannt.

Wesentlich bei der neuen Vorrichtung ist, dass das als Haufen oder Schwade vorliegende, lose aufgeschüttete, organische, verrottungsfähige Abfallmaterial, welches in der Regel in unterschiedlichster Mischung vorliegt, von der Vorrichtung zum Zerkleinern selbst aufgenommen, mit selbiger zu einer so genannten Materialmatratze zusammengedrückt und sodann zerkleinert wird. Bei der Bildung der sogenannten Materialmatratze wirken die wenigstens eine Einzugswalze, der Fräsrotor und beidseits vor dem Einzugsspalt, der dem Fräsrotor vorgelagert ist, angeordnete, im Wesentlichen vertikal und trichterförmig positionierte, Leitbleche sowie der Vorschub der Vorrichtung in Fahrtrichtung "Vorwärts" zusammen.

Durch eine hydraulische Sicherheitsschaltung wird bei Überlastung des Fräsrotors die Vorrichtung gestoppt, das heißt, bei Überlastung wird die Vorwärtsbewegung der Vorrichtung an den Materialhaufen heran gestoppt.

Die Steuerung des zumindest einen Antriebsaggregates, durch welches der Fräsrotor, die wenigstens eine Einzugswalze und auch das Fahrwerk antreibbar sind, erfolgt durch den Platzwart oder sonstigen Bediener mit einer externen Bedieneinheit über Funk. Dies ist insbesondere dann von Vorteil, wenn die neue Vorrichtung im unwegsamen Gelände eingesetzt wird. Solches unwegsames Gelände ist zum Beispiel ein Weinberg. Zwischen den in Reihen angeordneten Weinstöcken oder auch Obstbäumen liegt das beim Ausschneiden der Bäume bzw. der Rebstöcke anfallende Schnittgut. Dieses Schnittgut wurde bisher manuell abgetragen oder mittels einem an einer kleinen Zugmaschine (Weinbergtraktor) angeordneten Rechen aus den Gängen zwischen den Rebstöcken bzw. Obstbäumen herausgezogen und abgelegt zum Weiter- bzw. Abtransport mit einem Ladewagen.
Mit der neuen Vorrichtung ist es nun möglich, das in den Gängen liegende Schnittmaterial direkt vor Ort aufzunehmen und zu zerkleinern und zugleich zum Verrotten in den Gängen wieder abzulegen. Wesentlich ist jedoch, dass bei Einsatz der neuen Vorrichtung, die selbstfahrend und fahrerlos arbeitet, selbst extreme Schräglagen angefahren werden können. Sollte es aufgrund der extremen Schräglage des Geländes zu einer Situation kommen, in der die Vorrichtung umzukippen droht, ist der Bediener selbst nicht bedroht. Durch Steuerung der Vorrichtung mit Abstand zu selbiger kann der Bediener eine sich anbahnende Gefahrensituation auch besser erkennen, als wenn er selbst auf der Vorrichtung sitzen würde.

Bei großen Obst- oder Weinplantagen besteht nunmehr die Möglichkeit des Einsatzes einer speicherprogrammierten Steuerungseinheit für die Steuerung der neuen Vorrichtung. Bei solchen Großplantagen sind die Gänge und die Abstände vor und zwischen den Baum- bzw. Rebstockreihen im Raster festgelegt. Hier könnte also die neue Vorrichtung in einer Reihe starten und würde dann bis zu einer vorgegebenen Wegstrecke oder einer vorgegebenen Zeit ihre Arbeit verrichten ohne dass der Bediener in unmittelbarer Nähe sein müsste.

Das Einsatzgebiet der neuen Vorrichtung ist jedoch nicht auf die voran stehenden Einsatzfälle beschränkt.
So kann die neue Vorrichtung auch auf einem Abfallmaterial-Sammelplatz eingesetzt werden. Insbesondere bietet die neue Vorrichtung die Möglichkeit, das mit Lastkraftwagen angelieferte, zu einer Schwade abgelegte Abfallmaterial gleich zu zerkleinern.
Hierdurch wird unmittelbar nach Anlieferung des Abfallmaterials zumindest eine Volumenreduzierung vorgenommen und zudem der sonst übliche Zwischenschritt der Zwischen-Lagerung des Abfallmaterials in großen Haufen bis zu seiner Zerkleinerung eingespart. Mit der Erfindung kann also gegenüber vorbekannten Lösungen neben Arbeitszeit auch Lagerplatzkapazität eingespart werden.

Für den Einsatz im unwegsamen Gelände ist das Fahrwerk der neuen Vorrichtung bevorzugt als Raupenfahrwerk und für den bevorzugten Einsatz auf einem Sammelplatz für Abfallmaterial als Räderfahrwerk ausgebildet.

Die neue Vorrichtung ist nach einer Grundvariante der Art ausgebildet, dass im Wesentlichen in der vorderen Öffnung der Vorrichtung liegend und jeweils um eine Horizontalachse rotierbar zwei Einzugswalzen, unter Bildung eines Einzugsspaltes zwischen ihnen, angeordnet sind. Zudem sind diesen beiden liegenden Einzugswalzen zwei weitere Einzugswalzen vorgelagert, deren Rotationsachse mit Abstand zueinander jeweils im Wesentlichen vertikal zur befahrenen Bodenfläche stehend vorgesehen ist. Dabei ist der Abstand zwischen den beiden stehenden Einzugswalzen so groß gewählt, dass er der lichten Breite der vorderen Öffnung in der Vorderfront der Vorrichtung entspricht.
Vorzugsweise sind den stehenden Einzugswalzen jeweils außen angeordnete Leitelemente zugeordnet. Nach einer weiteren Ausführung ist die Neigung der Rotationsachse der stehenden Einzugswalzen bezüglich der Senkrechten zum Boden des befahrenen Geländes variierbar.

In spezieller Ausführung ist zudem die liegende obere Einzugswalze höhenverstellbar bezüglich des Einzugsspaltes angeordnet.

Bei einer zweiten Grundvariante der neuen Vorrichtung sind zwar auch zwei jeweils um eine Horizontalachse rotierbare Einzugswalzen, eine liegende untere und eine liegende obere, unter Bildung eines Einzugsspaltes zwischen ihnen, im Wesentlichen in der vorderen Öffnung liegend angeordnet, jedoch ist der liegenden unteren Einzugswalze eine untere Zuführeinheit vorgelagert, wobei Letztere wenigstens ein Zinken besetztes Förderband aufweist.

Im speziellen ist bei einer weiteren Ausführungsvariante vorgesehen, dass die liegende untere Einzugswalze integral mit der unteren Zuführeinheit ist, wodurch insbesondere der bautechnische als auch der Wartungsaufwand bei einer derartigen Vorrichtung verringert werden kann.

Nach einer anderen Ausführungsvariante ist das besagte mit Zinken besetzte Förderband der unteren Zuführeinheit ein Gliederbandförderer, bevorzugt ist dabei der Gliederbandförderer zugleich eine Siebfläche. Diese Ausführung ist insbesondere dann vorteilhaft, wenn das Abfallmaterial einen hohen Anteil von Grünschnitt enthält, so dass bereits bei Aufnahme des Abfallmaterials, also vor Erreichen des Fräsrotors, die kleinen Bestandteile aus dem Abfallmaterial ausgeschieden werden können, was sich vorteilhaft auf die notwendige Leistungsaufnahme des Fräsrotors als auch auf die Standzeit seiner Fräszähne auswirkt.

Bei der zweiten Grundvariante der neuen Vorrichtung ist, bevorzugt beim Einsatz an hoch aufgeschüttetem Abfallmaterial, als ergänzende Ausführungsvariante vorgesehen, dass auch der liegenden oberen Einzugswalze eine Zuführeinheit vorgelagert ist, wobei diese obere Zuführeinheit wenigstens ein, in einem Rahmen geführtes Zinken besetztes Förderband aufweist.
Insbesondere wenn vorgesehen ist, dass die neue Vorrichtung vordergründig für den vorgenannten Einsatzfall konzipiert wird, ist in spezieller Ausführung die liegende obere Einzugswalze integral mit der oberen Zuführeinheit. Hierdurch ergeben sich die bereits weiter vorn genannten Vorteile.
Auch bei dieser Ausführung kann das Zinken besetzte Förderband ein Gliederbandförderer sein.

Nach einer weiteren speziellen Ausführung ist zur Erhöhung der Variabilität der neuen Vorrichtung zudem vorgesehen, dass die liegende obere Einzugswalze höhenverstellbar bezüglich des Einzugsspaltes angeordnet ist und/oder die untere Zuführeinheit und/oder die obere Zuführeinheit in ihrer Schräglage zur Horizontalen bzw. zur Bodenfläche variabel einstellbar sind.

Damit auch ein breit angelegter Schwad in einer Anfahrt von der neuen Vorrichtung erfasst werden kann, ist an der Vorderfront der neuen Vorrichtung, beidseits der unteren Zuführeinheit, jeweils ein im Wesentlichen vertikal gerichtetes und schwenkbares Leitblech angeordnet.
Bevorzugt ist zudem vorgesehen, dass diese Leitbleche während der Aufnahme des Abfallmaterials oszilieren, so dass außen liegendes Abfallmaterial stets nach innen auf eine durch die Breite der unteren Zuführeinheit bestimmte Schwadbreite zusammengeschoben wird.

Die Erfindung wird nachfolgend anhand von in Zeichnungen schematisch dargestellten Ausführungsbeispielen in Details und näher erläutert. Dabei zeigen:
- Fig. 1: eine perspektivische Ansicht auf eine erste Variante der neuen Vorrichtung, mit Sicht von hinten in Fahrtrichtung;
- Fig. 2: eine perspektivische Ansicht auf die Vorderfront der Vorrichtung nach Fig. 1;
- Fig. 3: eine Vorderansicht auf die neue Vorrichtung nach Fig. 1
- Fig. 4: eine schematische Darstellung der Verdichtung des dem Fräsrotor der Vorrichtung zugeführten Abfallmaterials;
- Fig. 5: eine perspektivische Ansicht auf eine weitere Variante der neuen Vorrichtung, mit Sicht auf die Vorderfront;
- Fig. 6: eine perspektivische Ansicht der Vorrichtung nach Fig. 5 von hinten;
- Fig. 7: eine Draufsicht auf die Vorrichtung nach Fig. 5 und
- Fig. 8: eine schematische Seitenansicht der Vorrichtung nach Fig. 5.

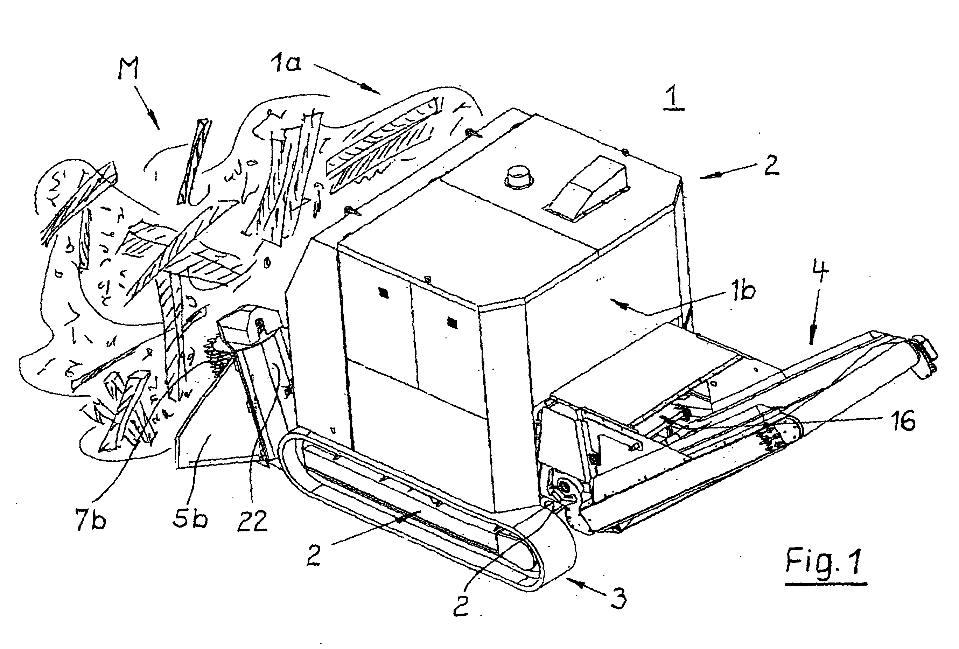

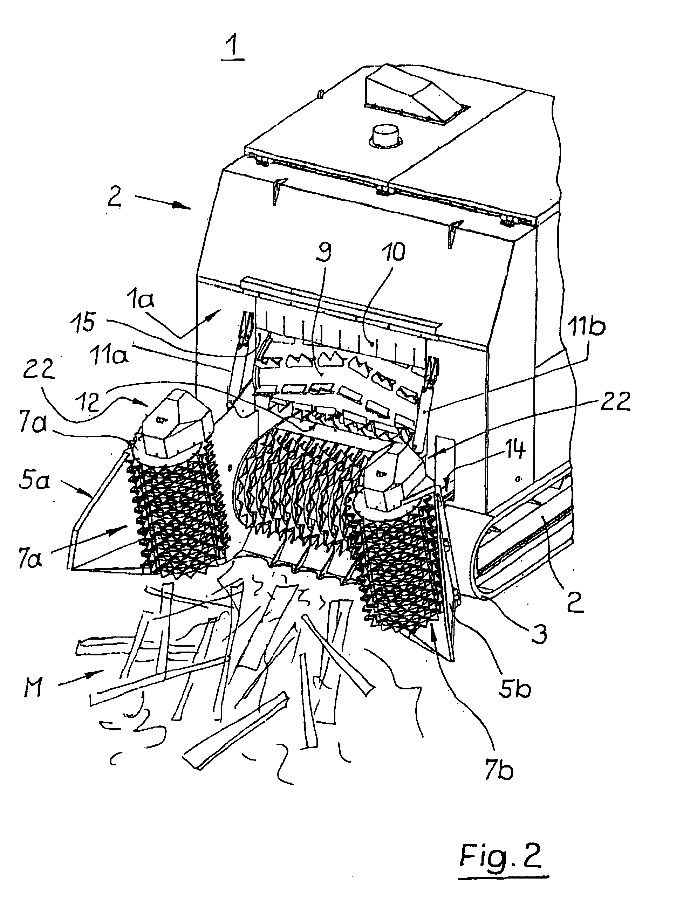

Die neue Vorrichtung 1 zum Zerkleinern von in losen Haufen oder Schwade vorliegenden organischen, verrottungsfähigen Abfallmaterialien besteht aus einem rahmenartigen Gestell 2 nebst Fahrwerk 3, hier im Speziellen ein Raupenfahrwerk. Damit insbesondere während des Betriebes der Vorrichtung 1 rotierende und bewegte Bauteile und Baugruppen der Vorrichtung 1 abgedeckt sind, ist das rahmenartige Gestell 2 mit Verkleidungsteilen versehen, die teils wahlweise lösbar bzw. kippbar angeordnet sind. In der Vorderfront 1 a und in der Rückfront 1 b ist jeweils eine Öffnung vorgesehen, die vordere Öffnung 15 und die hintere Öffnung 16, siehe hierzu in Figur 1, 2 und 3.

Durch die vordere Öffnung 15 wird zu zerkleinerndes Material "M" dem in der Vorrichtung 1 angeordneten Fräsrotor 13 zugeführt. Das zerkleinerte Material wird dann durch die hintere Öffnung 16 wieder ausgegeben. In der gezeigten Ausführung ist der hinteren Öffnung eine Austragseinheit 4 zugeordnet. Diese Austragseinheit ist in ihrer Abwurfhöhe einstellbar und wahlweise zur Seite schwenkbar. Hierdurch wird die gezielte Anlage einer Schwade erleichter. Zudem ist vorgesehen, dass die Geschwindigkeit des Förderbandes regulierbar ist.
Im Bereich der vorderen Öffnung 15 sind zwei Einzugswalzen 8 und 9 angeordnet, deren Rotationsachse 8a bzw. 9a jeweils im Wesentlichen horizontal liegend ausgerichtet ist. Die liegende untere Einzugswalze 8 ist in ihrer Position vorzugsweise fest angeordnet. Die liegende obere Einzugswalze 9 ist bevorzugt höhenverstellbar 9b angeordnet. Zwischen beiden Einzugswalzen 8 und 9 ist ein Einzugsspalt 12 vorgesehen. Durch die Höhenverstellbarkeit 9b der liegenden oberen Einzugswalze 9 kann dieser Einzugsspalt 12 bei Bedarf variabel eingestellt werden.

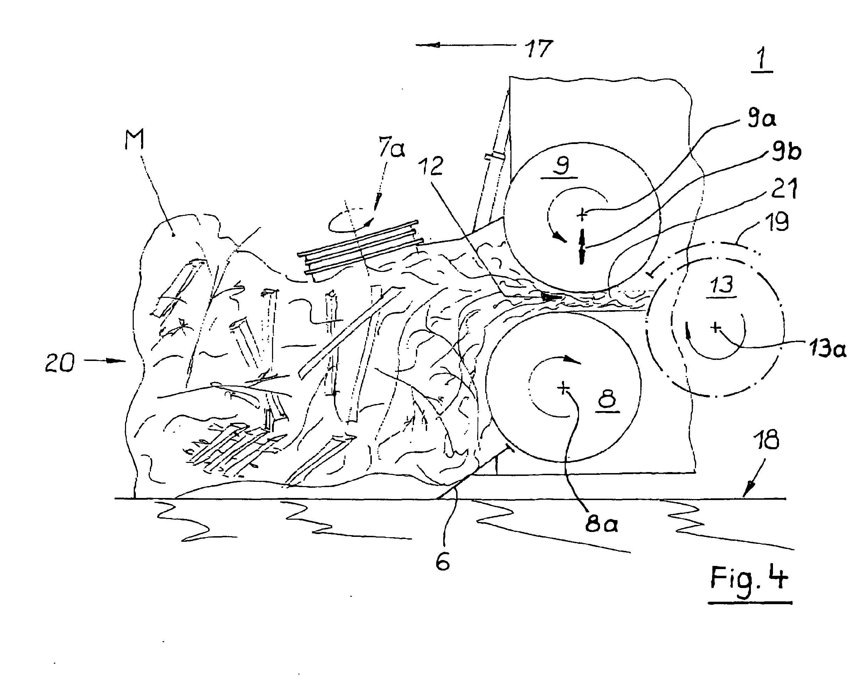

In Materialflussrichtung 20 gesehen, hierzu Fig. 4, also von der vorderen Öffnung 15 in Richtung hintere Öffnung 16, ist dem zwischen der liegenden unteren Einzugswalze 8 und der liegenden oberen Einzugswalze 9 gebildeten Einzugsspalt 12 ein um eine im Wesentlichen horizontal liegende Achse 13a rotierender Fräsrotor 13 nachgelagert vorgesehen. Mit einer Strich-Punkt-Linie angedeutet ist ein dem Fräsrotor zugeordneter rechenartiger Kamm 19, der vorzugsweise ein Viertel der Umfangsfläche des Rotors 13 überdeckt. Dieser rechenartige Kamm 19 ist soweit an den Rotor herangeführt gelagert, dass die Zähne des Rotors bei dessen Rotation sich zwischen den Zinken des kammartigen Rechens berührungsfrei hindurchbewegen können. Zudem ist dieser Kamm 19 federnd gelagert. Hierdurch wird erreicht, dass bei Eindringen von nicht zerkleinerungsfähigen Körpern der Abstand zwischen Kamm 19 und Werkzeuge (Zinken) des Rotors vergrößerbar ist, d.h. der Kamm 19 hochschwenkbar bzw. abhebbar ist, wodurch eine Beschädigung der Zinken des Fräsrotors in einem solchen Fall vermeidbar ist.

Den beiden liegenden Einzugswalzen 8 und 9 sind zwei weitere Einzugswalzen 7a und 7b vorgelagert. Die Rotationsachse dieser beiden Einzugswalzen 7a und 7b ist jeweils im Wesentlichen vertikal (stehend) angeordnet. Die stehende rechte Einzugswalze 7a und die stehende linke Einzugswalze 7b sind so weit zueinander beabstandet, dass der Zwischenraum zwischen ihnen in etwa der Breite der in der Vorderfron 1at der Vorrichtung 1 vorgesehenen vorderen Öffnung 15 entspricht. In Fahrtrichtung "Vorwärts" 17 gesehen sind außenliegend neben den beiden stehenden Einzugswalzen 7a und 7b jeweils ein rechtes 5a bzw. linkes 5b Leitelement angeordnet.

Unterhalb der fest angeordneten liegenden unteren Einzugswalze 8 ist ein bodenseitiges Leitelement 6 vorgesehen, welches geringfügig vom Boden 18, auf dem die Abfallmaterialien aufgeschichtet sind, beabstandet ist.

Die stehende rechte Einzugswalze 7a und die stehende linke Einzugswalze 7b rotieren, ebenso wie die liegenden Einzugswalzen 8 und 9, gegenläufig, sodass das angefahrene Material zwischen den beiden Einzugswalzen 7a und 7b hindurch der liegenden unteren Einzugswalze 8 und der liegenden oberen Einzugswalze 9 zugeführt ist.
Das rechte Leitelement 5a und das linke Leitelement 5b verhindern einerseits, dass von den Einzugswalzen 7a und 7b bewegtes Material nach außen weggeschleudert wird (Schutzfunktion) und zum anderen wirken sie mit ihrem in Fahrtrichtung 17 vorn liegenden Bereichen als Leitbleche, sodass angefahrenes, lose aufgeschichtetes Abfallmaterial sich nicht von den rotierenden Einzugswalzen 7a und 7b seitwärts weg bewegen kann.

Das unterhalb und vor der liegenden unteren Einzugswalze 8 angeordnete bodenseitige Leitelement 6 verhindert ein Ausweichen von angefahrenem Abfallmaterial unter die Vorrichtung 1 selbst und an selbigen 6 schiebt sich das angefahrene Abfallmaterial aufwärts zur liegenden unteren Einzugswalze 8 hin. Durch die liegende untere Einzugswalze 8 wird das bezüglich des Einzugsspaltes 12 unten liegende Abfallmaterial und durch die liegende obere Einzugswalze 9 das oberhalb bezüglich des Einzugsspaltes 12 liegende Abfallmaterial jeweils dem Einzugsspalt 12 zugeführt.
Durch die Verwendung der vorgenannten vier Einzugswalzen 7a, 7b, 8 und 9 und deren beschriebenen Anordnung zueinander wird von dem im Haufen lose aufgeschichteten Abfallmaterial eine relativ dichte Materialmatratze 21 erzeugt, die dem unmittelbar nach den beiden liegenden Einzugswalzen 8 und 9 vorgesehenen Fräsrotor 13 zum Zerkleinern zugeführt wird.
Mit Bezugszeichen 11 a und 11 b sind zwei jeweils beidseits der vorderen Öffnung 15 an der Vorderfront 1 a angelenkte Verstellelemente bezeichnet, hier Hydraulikzylinder, die mit ihrem anderen Ende jeweils an einem Gestell 22 zur Lagerung der stehenden linken Einzugswalze 7b bzw. stehenden rechten Einzugswalze 7a angreifen.
Das schon erwähnte rechte Leitelement 5a und das linke Leitelement 5b sind ebenfalls an einer dieser Baugruppen 22 befestigt. Durch Bewegung der Verstellelemente 1 1 a und 11 b wird der Neigungswinkel der beiden Einzugswalzen 7a und 7b bezüglich der Senkrechten zur Bodenfläche 18 eingestellt.

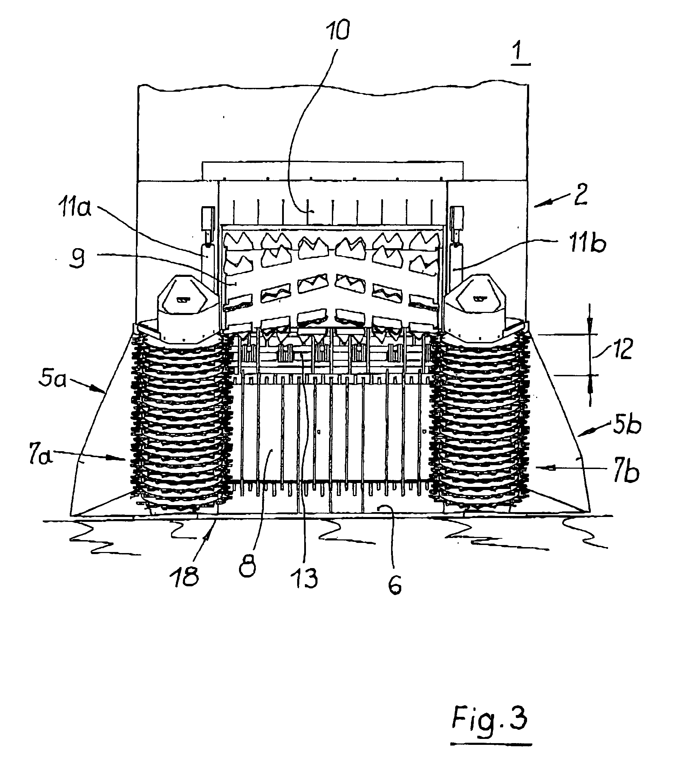

In Figur 3, also der totalen Frontalansicht auf die Vorderfront 1a der Vorrichtung 1, ist zwischen dem durch die liegende untere Einzugswalze 8 und die liegende obere Einzugswalze 9 gebildeten Einzugsspalt 12 hindurch gesehen im Inneren der Vorrichtung 1 der im Wesentlichen horizontal liegend angeordnete Fräsrotor 13 zu sehen. In dieser Darstellung ist auch noch einmal deutlich zu sehen, dass das rechte Leitelement 5a und das linke Leitelement 5b angefahrenes Material zu der stehenden rechten Einzugswalze 7a bzw. zu der stehenden linken Einzugswalze 7b hin leitet. Oberhalb der liegenden oberen Einzugswalze 9 ist im Bereich der vorderen Öffnung 15 und selbige verdeckend ein Spritzschutz 10 aus flexiblem Material angeordnet. Dieser Spritzschutz verdeckt bei Höhenverstellung der liegenden oberen Einzugswalze 9 in Richtung nach unten auch den durch diese Ortsveränderung der Einzugswalze 9 im oberen Bereich der vorderen Öffnung 15 größer werdenden Freiraum.

In der Fig. 4 ist in stark vereinfachter schematischer Darstellung der Materialfluss gezeigt. Die Vorrichtung 1 bewegt sich hier in Fahrtrichtung "Vorwärts" 17 in das in einem Haufen lose aufgeschichtete organische, verrottungsfähige Material "M" zu und fährt mit den vor seiner Vorderfront angeordneten Leitblechen und stehend angeordneten rotierenden Einzugswalzen, hier ist die in Fahrtrichtung "Vorwärts" rechts liegende Einzugswalze 7a zu sehen, in das Material "M" hinein. Das Material "M" wird durch die stehenden Einzugswalzen als auch durch die Leitbleche erfasst und in Richtung Einzugsspalt 12 und den beiden liegend angeordneten Einzugswalzen 8 und 9 hin befördert. Beide zueinander beabstandet liegende Einzugswalzen 8 und 9 verdichten das herangezogene bzw. herangeschobene Material "M" in dem zwischen ihnen gebildeten Einzugsspalt 12 zu einer relativ dichten Materialmatratze 21. Dieses Verdichten des im Haufen lose liegenden Materials zu einer relativ dichten Materialmatratze hat den Vorteil, dass der anlagentechnische Aufwand für den das Abfallmaterial zerkleinernden Fräsrotor, dessen Führungs- und Lagereinheiten gering gehalten werden kann. Andererseits wird das Verhältnis von aufgewendeter Leistung (Energieverbrauch) zu der Menge zerkleinerten Materials positiv beeinflusst.

Alle in der vorstehenden Beschreibung erwähnten sowie auch nur allein aus der Zeichnung entnehmbaren Merkmale sind weitere Bestandteile der Erfindung, auch wenn sie nicht besonders hervorgehoben und insbesondere nicht in den Ansprüchen erwähnt sind. Die Erfindung ist nicht auf das beschriebene Ausführungsbeispiel beschränkt, sondern im Rahmen der Offenbarung vielfach variabel.

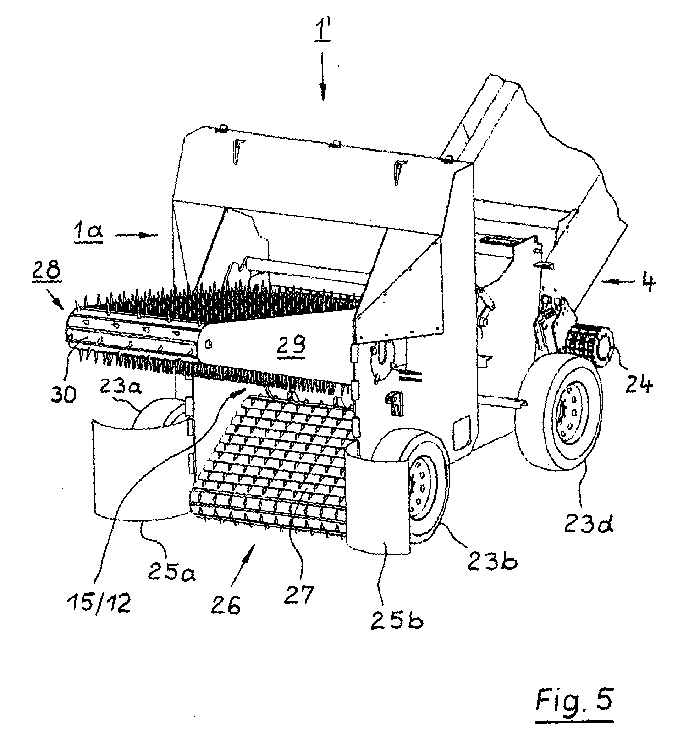

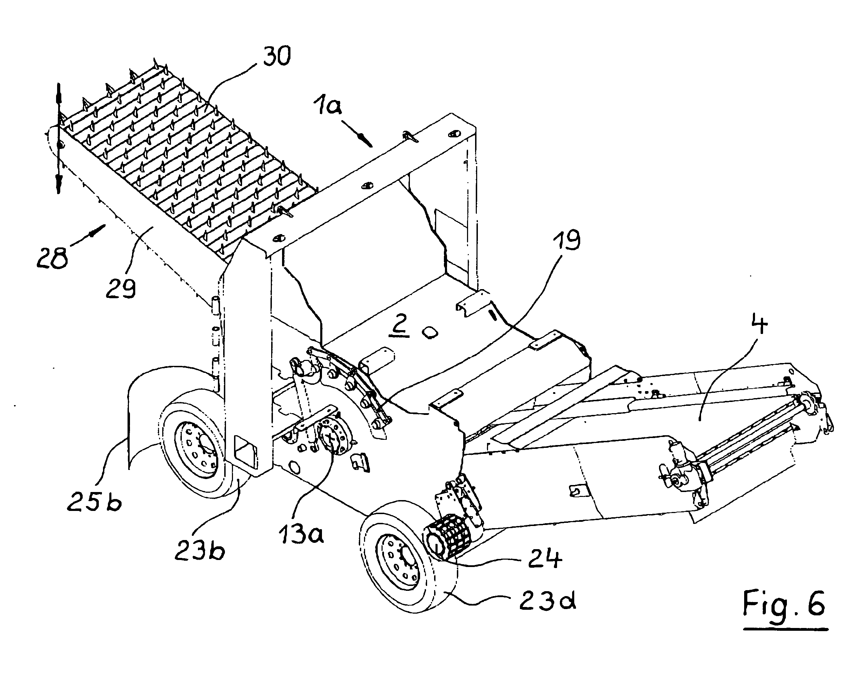

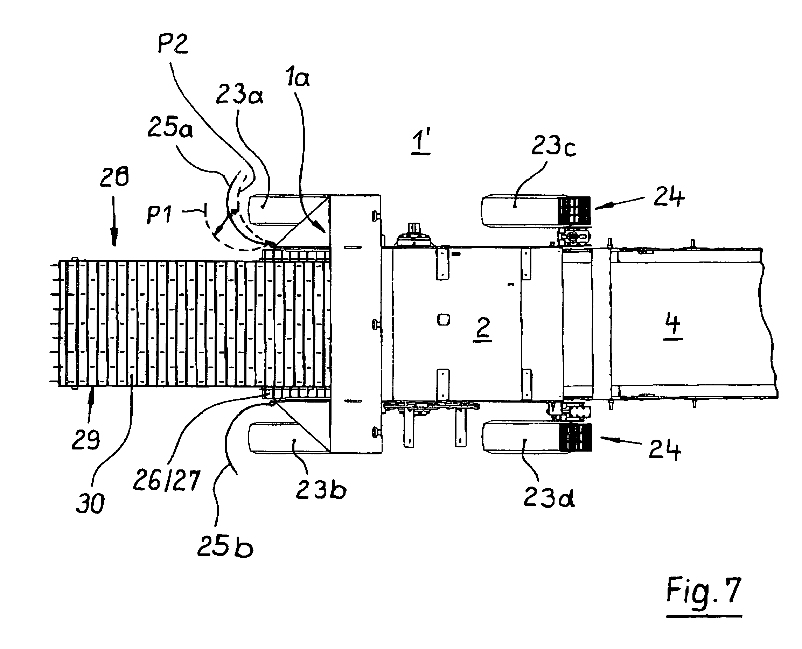

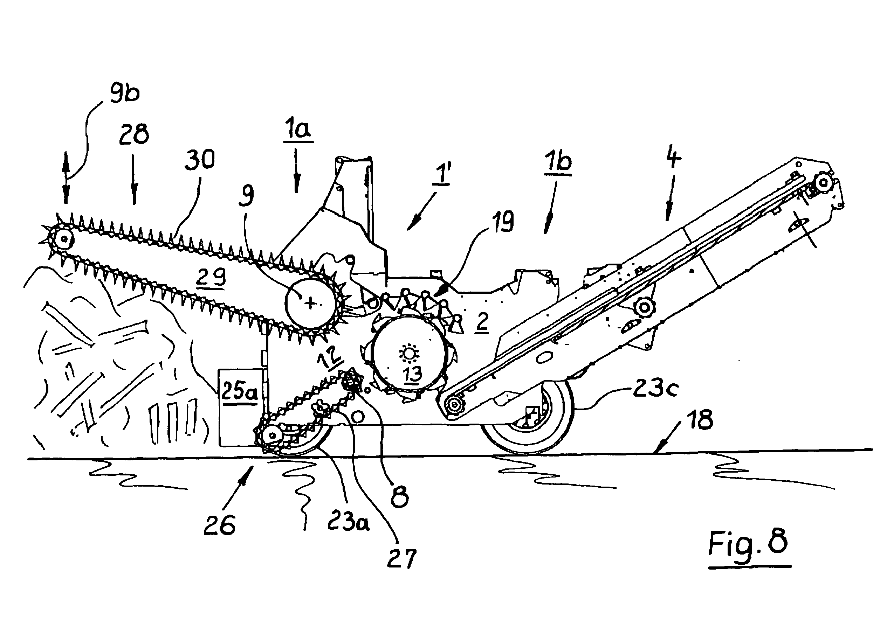

So sind bei einer zweiten Grundvariante der neuen Vorrichtung1', die in den Figuren 5 bis 8 gezeigt ist, auch zwei jeweils um eine horizontale Achse rotierbare Einzugswalzen vorgesehen. Eine liegende untere 8 und eine liegende obere 9 Einzugswalze. In deren Endbereichen wird zwischen ihnen ebenfalls der Einzugsspalt 12 gebildet; hierzu Fig. 8.

Bei den Darstellungen in den Figuren 5 bis 8, einer perspektivischen Vorderfront-Ansicht, einer perspektivischen Ansicht auf die Rückfront, einer Draufsicht und einer schematischen Seitenansicht sind die äußeren Verkleidungsteile des rahmenartigen Gestells 2 nicht gezeichnet worden.
Bei der Darstellung in Figur 8 wurden die in Fahrtrichtung links liegenden Wandteile nicht gezeichnet, so dass ein Blick ins Innere der Vorrichtung 1' möglich ist

Speziell ist bei dieser Ausführung der liegenden unteren Einzugswalze 8 eine untere Zuführeinheit 26 vorgelagert, wobei Letztere 26 wenigstens ein Zinken besetztes Förderband 27 aufweist, und wobei die liegende untere Einzugswalze 8 integral mit der unteren Zuführeinheit 26 ist. Im Speziellen ist das Zinken besetzte Förderband 27 ein Gliederbandförderer.
Wie bei der neuen Vorrichtung 1 nach der ersten Grundvariante - Figur 1 bis 4 - ist auch hier an der Rückfront 1 b eine Austrageinheit 4 vorgesehen. Ebenso besteht hier die Zerkleinerungseinheit zumindest aus dem Fräsrotor 13 und einem mit Abstand zugeordneten rechenartigen Kamm 19.

Das Fahrwerk dieser Vorrichtung 1' ist ein Räderfahrwerk mit vier Rädern 23a, 23b, 23c und 23d. Die hinteren Räder 23c und 23d werden jeweils über einen am Gestell 2 angeordneten Einzelradantrieb 24 angetrieben.

Weiterhin ist bei dieser zweiten Grundvariante vorgesehen, dass auch der liegenden oberen Einzugswalze 9 eine Zuführeinheit 28 vorgelagert ist, wobei diese obere Zuführeinheit 28 wenigstens ein, in einem Rahmen 29 geführtes Zinken besetztes Förderband 30 aufweist. Auch die liegende obere Einzugswalze 9 ist integral mit der oberen Zuführeinheit 30. Das Zinken besetzte Förderband 30 ist vorzugsweise ein Gliederbandförderer.

Wie bei der ersten Grundvariante ist auch hier vorgesehen, dass die liegende obere Einzugswalze 9 höhenverstellbar 9b bezüglich des Einzugsspaltes 12 angeordnet ist.

Zudem sind die untere Zuführeinheit 26 und/oder die obere Zuführeinheit 28 in ihrer Schräglage zur Horizontalen bzw. zur Bodenfläche 18 variabel einstellbar.

Als weitere spezielle Ausgestaltung ist bei dieser Grundvariante an der Vorderfront 1a, beidseits der unteren Zuführeinheit 26, jeweils ein im Wesentlichen vertikal gerichtetes Leitblech 25a, 25b schwenkbar angeordnet. Der bevorzugt vorgesehene Schwenkbereich jedes Leitbleches 25a, 25b ist am rechten Leitblech 25a durch die gestrichelten Linien P1 und P2 angedeutet.
An der Vorderfront 1 a des Gestells 2 sind im Bereich der Anlenkung der Leitbleche 25a, 25b mehrere Scharnierteile (ohne Bezugszeichen) vorgesehen, so dass bei Bedarf jeweils mehrere Leitbleche übereinander angeordnet werden können. Die jeweiligen Öffnungswinkel zwischen zwei Leitblechen sind dabei so gewählt, dass von oben nach unten gesehen ein Trichter gebildet ist, also die Leitbleche zugleich einen horizontal und vertikal ausgerichteten Trichter bilden.
Die an der Vorderfront 1 a angelenkten Stellmittel für das Schwenken der Leitbleche 25a, 25b sind an sich bekannte Bauteile, die hier nicht gezeichnet wurden.

### Bezugszeichenliste

- 1, 1': Vorrichtungen (zum Zerkleinern von organischem, verrottungsfähigen Abfallmaterialien)
- 1a: Vorderfront
- 1b: Rückfront
- 2: rahmenartiges Gestell (mit teils wahlweise lösbaren bzw. kippbaren Verkleidungsteilen)
- 3: Fahrwerk (Raupenfahrwerk)
- 4: Austrageinheit
- 5a: rechtes Leitelement
- 5b: linkes Leitelement
- 6: bodenseitiges Leitelement
- 7a: stehende rechte Einzugswalze
- 7b: stehende linke Einzugswalze
- 8: liegende untere Einzugswalze
- 8a: Rotationsachse (von Pos. 8)
- 9: liegende obere Einzugswalze
- 9a: Rotationsachse (von Pos. 9)
- 9b: Höhenverstellung (von Pos. 9)
- 10: Spritzschutz aus flexiblem Material
- 11a, 11b: Verstellelemente
- 12: Einzugsspalt
- 13: Fräsrotor
- 13a: Rotationsachse (von Pos 13)
- 14: Strebe
- 15: vordere Öffnung
- 16: hintere Öffnung
- 17: Fahrtrichtung "Vorwärts"
- 18: Bodenfläche
- 19: rechenartiger Kamm
- 20: Materialflussrichtung
- 21: Materialmatratze
- 22: Gestell (für Pos. 7a bzw. 7b)
- 23a, 23b, 23c, 23d: Räder des Radfahrwerkes
- 24: Einzelradantrieb
- 25a: rechtes Leitblech
- 25b: linkes Leitblech
- 26: untere Zuführeinheit
- 27: Förderband, zinkenbesetzt
- 28: obere Zuführeinheit
- 29: Rahmen
- 30: Förderband, zinkenbesetzt
- M: Material
- P1-P2: Schwenkbereich (der Pos. 25a und 25b)

## Patentansprüche

1. Vorrichtung (1) zum Zerkleinern von organischen, verrottungsfähigen Abfallmaterialien, die wenigstens
ein rahmenartiges Gestell (2) nebst Fahrwerk (3), ein Antriebsaggregat, eine Steuerungseinheit, einen Fräsrotor (13) und wenigstens eine letzterem (13) vorgelagerte Einzugswalze (8 oder 9), ein Leitblech sowie Mittel zur Übertragung von Steuerungssignalen und Mittel zur Übertragung von mit dem Antriebsaggregat erzeugten Bewegungen zum Fräsrotor und zur Einzugswalze hin aufweist, und die wenigstens eine vordere Öffnung (15) und eine hintere Öffnung (16), zwecks Zufuhr des Abfallmaterials (M) zum Fräsrotor (13) bzw. Ausgabe des zerkleinerten Materials, besitzt,
**dadurch gekennzeichnet, dass**
die wenigstens eine Einzugswalze (8 oder 9) und der Fräsrotor (13) derart angeordnet sind, dass das zu zerkleinernde Abfallmaterial unter Einwirkung der Einzugswalze (8 oder 9) in selbstaufnehmender Art dem Fräsrotor (13) zugeführt wird.

2. Vorrichtung nach Anspruch 1,
**dadurch gekennzeichnet, dass**
der vorderen Öffnung (15) in der Vorderfront (1c) der Vorrichtung (1) mehrere Einzugswalzen zugeordnet sind.

3. Vorrichtung nach Anspruch 2,
**dadurch gekennzeichnet, dass**
zwei Einzugswalzen (8, 9), unter Bildung eines Einzugsspaltes (12) zwischen ihnen, im Wesentlichen in der vorderen Öffnung (15) liegend und jeweils um eine Horizontalachse rotierbar angeordnet sind sowie letzteren (8, 9) zwei weitere Einzugswalzen (7a, 7b) vorgelagert sind, deren Rotationsachse mit Abstand zueinander jeweils im Wesentlichen vertikal zur befahrenen Bodenfläche (18) stehend vorgesehen ist.

4. Vorrichtung nach Anspruch 3,
**dadurch gekennzeichnet, dass**
der Abstand zwischen den beiden stehenden Einzugswalzen (7a, 7b) so groß gewählt ist, dass er der lichten Breite der vorderen Öffnung (15) in der Vorrichtung (1) entspricht.

5. Vorrichtung nach Anspruch 3 oder 4,
**dadurch gekennzeichnet, dass**
den stehenden Einzugswalzen (7a, 7b) jeweils außen angeordnete Leitelemente (5a, 5b) zugeordnet sind.

6. Vorrichtung nach Anspruch 1, 2, 3, 4 oder 5,
**dadurch gekennzeichnet, dass**
die liegende obere Einzugswalze (9) höhenverstellbar bezüglich des Einzugsspaltes (12) angeordnet ist.

7. Vorrichtung nach Anspruch 3,
**dadurch gekennzeichnet, dass**
die Neigung der Rotationsachse der stehenden Einzugswalzen (7a, 7b) bezüglich der Senkrechten zum Boden (18) des befahrenen Geländes variierbar ist.

8. Vorrichtung nach Anspruch 1 oder 2,
**dadurch gekennzeichnet, dass**
zwei Einzugswalzen, eine liegende untere (8) und eine liegende obere ( 9), unter Bildung eines Einzugsspaltes (12) zwischen ihnen, im Wesentlichen in der vorderen Öffnung (15) liegend und jeweils um eine Horizontalachse (8a, 9a) rotierbar angeordnet sind sowie der liegenden unteren Einzugswalze (8) eine untere Zuführeinheit (26) vorgelagert ist, wobei Letztere (26) wenigstens ein Zinken besetztes Förderband (27) aufweist.

9. Vorrichtung nach Anspruch 8,
**dadurch gekennzeichnet, dass**
die liegende untere Einzugswalze (8) integral mit der unteren Zuführeinheit (26) ist.

10. Vorrichtung nach Anspruch 8 oder 9,
**dadurch gekennzeichnet, dass**
das Zinken besetzte Förderband (27) ein Gliederbandförderer ist.

11. Vorrichtung nach Anspruch 1 oder 2,
**dadurch gekennzeichnet, dass**
zwei Einzugswalzen, eine liegende untere (8) und eine liegende obere ( 9), unter Bildung eines Einzugsspaltes (12) zwischen ihnen, im Wesentlichen in der vorderen Öffnung (15) liegend und jeweils um eine Horizontalachse (8a. 9a) rotierbar angeordnet sind sowie der liegenden oberen Einzugswalze (9) eine obere Zuführeinheit (28) vorgelagert ist, wobei Letztere (28) wenigstens ein, in einem Rahmen (29) geführtes Zinken besetztes Förderband (30) aufweist.

12. Vorrichtung nach Anspruch 11,
**dadurch gekennzeichnet, dass**
die liegende obere Einzugswalze (9) integral mit der oberen Zuführeinheit (30) ist.

13. Vorrichtung nach Anspruch 11 oder 12,
**dadurch gekennzeichnet, dass**
das Zinken besetzte Förderband (30) ein Gliederbandförderer ist.

14. Vorrichtung nach Anspruch 11, 12 oder 13,
**dadurch gekennzeichnet, dass**
die liegende obere Einzugswalze (9) höhenverstellbar bezüglich des Einzugsspaltes (12) angeordnet ist.

15. Vorrichtung nach Anspruch 8, 9, 10, 11, 12, 13 oder 14,
**dadurch gekennzeichnet, dass**
die untere Zuführeinheit (26) und/oder die obere Zuführeinheit (28) in ihrer Schräglage zur Horizontalen bzw. zur Bodenfläche (18) variabel einstellbar ist.

16. Vorrichtung nach einem der Ansprüche 8 bis 15,
**dadurch gekennzeichnet, dass**
an der Vorderfront (1a) beidseits der unteren Zuführeinheit (46) jeweils ein im Wesentlichen vertikal gerichtetes und schwenkbares Leitblech (25a, 25b) angeordnet ist.
